# EUROPÄISCHE PATENTSCHRIFT

(11) **EP 0 580 016 B1**
(45) Veröffentlichungstag und Bekanntmachung des Hinweises auf die Patenterteilung: **24.10.2001**
(21) Anmeldenummer: 93110816.1
(22) Anmeldetag: 07.07.1993
(51) Int. Cl.: H04L 12/44, H04J 3/06, H04L 12/64, B60R 16/02

(54) **Lokales Operationsnetzwerk**
Local area network
Réseau local

(30) Priorität: 23.07.1992 DE 4224339
(43) Veröffentlichungstag der Anmeldung: 26.01.1994
(73) Patentinhaber: ALCATEL, 75008 Paris (FR)
(72) Erfinder: Weis, Bernd X., D-70825 Korntal (DE); Schlesinger, Heinz, D-74395 Mundelsheim (DE); Schmietainski, Anke, D-71282 Hemmingen (DE)
(74) Vertreter: Menzietti, Domenico, Dipl.-Ing.

(56) Entgegenhaltungen:
- EP-A- 0 255 442
- EP-A- 0 435 467
- EP-A- 0 439 646
- EP-A- 0 486 931
- IBM TECHNICAL DISCLOSURE BULLETIN, Bd.32, Nr.5B, Oktober 1989, NEW YORK US Seiten 357 - 361 'Adaptive Slotted Bus Metropolitan Area Network Protocol'

## Beschreibung

Die Erfindung betrifft ein lokales Operationsnetzwerk, welches eine Anzahl von Teilnehmer aufweist, die jeweils über eine Busleitung mit einem zentralen Sternkoppler verbunden sind, wobei die von einem Teilnehmer ausgesendete Nachricht über den zentralen Sternkoppler zu allen Teilnehmern des lokalen Operationsnetzwerks geleitet wird.

Ein derartiges lokales Operationsnetzwerk für den automotiven Bereich ist aus der DE-OS 35 06 118 bekannt. Das hierbei verwendete asynchrone Buszugriffsverfahren ist ein Carrier-Sensing-Multiple-Access-Verfahren mit Collision-Detection (CSMA/CD), bei dem ein Zugriffskonflikt zweier oder mehrerer Teilnehmer durch einen Arbitrierungsmechanismus auf Bitebene gelöst wird.

Nachteilig an dem bekannten Operationsnetzwerk ist, daß es nicht flexibel genug ist, um den gestiegenen Anforderungen im automotiven Bereich zu genügen. In einem modernen lokalen Operationsnetzwerk sollen im automotiven Bereich nicht nur die standardmäßig in einem jedem Automobil anfallenden Daten zur Gewährleistung der Funktionalität des Autos und zur Funktionsgruppenüberwachung und -steuerung übertragen werden. Vielmehr bietet jeder namhafte Automobilhersteller - um den Wünschen der Kunden Rechnung zu tragen - eine Reihe von Sonderaustattungen an. Es sind daher neben den Standarddaten noch eine Reihe weiterer Daten über das lokale Operationsnetzwerk zu übertragen, welche zur Steuerung der Sonderausrüstungen erforderlich sind oder beim Betrieb dieser Zusatzeinrichtungen anfallen. Bei der Ausrüstung eines Automobils mit derartigen Sonderaustattungen tritt dann das Problem auf, daß diese bei unterschiedlichen Modellen an unterschiedlichen Stellen angebracht werden müssen. Dadurch treten von Modell zu Modell unterschiedliche Signallaufzeiten zwischen diesen Teilnehmern und dem zentralen Sternkoppler auf. Das bekannte automotive lokale Operationsnetzwerk erlaubt es nicht, diesen unterschiedlichen und modellabhängig-variierenden Signallaufzeiten Rechnung zu tragen. Es ist daher in seinem Anwendungsbereich stark eingeschränkt und daher nicht universell einsetzbar.

Außerdem tritt bei der Integration der unterschiedlichen Sonderausstattungen in dem einzigen Operationsnetzwerk das Problem auf, daß bei der gemeinsamen Übertragung von autotypischen und Signalen der Sonderausrüstungen (z.B. elektronisches Bordbüro) synchrone und asynchrone Daten gemeinsam vermittelt werden müssen, wobei die Datenraten von wenigen Baud bis zu mehreren MBaud variieren. Um die Synchronität im Netz herzustellen, ist es dann ebenfalls erforderlich, Laufzeitunterschiede auszugleichen.

Außerdem tritt bei einem auf einer optischen Übertragungstechnik basierenden lokalen Operationsnetzwerk das Problem auf, daß sich die Übertragungszeiten infolge der natürlichen Alterung der hierzu eingesetzten Glasfasern ändern. Das bekannte lokale Operationsnetzwerk kann auch diesem Umstand nicht Rechnung tragen.

Aus EP0435467A2 ist ein optisches Netzwerk bekannt, das eine zentrale Verteileinrichtung beinhaltet, an die mehrere Knoten angeschlossen sind. Jeder Knoten ist über n Leitungen mit der zentralen Verteileinrichtung verbunden; n entspricht der Anzahl der angeschlossenen Knoten. Die Knoten senden Nachrichten über eine Leitung an die zentrale Verteileinrichtung. Die zentrale Verteileinrichtung verteilt die empfangenen Nachrichten aller Knoten jeweils über n Leitungen an alle n Knoten. Ein Knoten wird als Referenzknoten ausgewählt. Alle anderen Knoten synchronisieren sich auf den Referenzknoten, so daß alle von den n Knoten ausgesendeten Nachrichten synchron an der Verteileinrichtung eintreffen. Die Verteileinrichtung verteilt die synchron empfangenen Nachrichten synchron an alle Knoten, zu jedem Knoten über n Leitungen.

Zur Vermeidung obiger Nachteile stellt sich die Erfindung die Aufgabe, ein lokales Operationsnetzwerk der eingangs genannten Art derart weiterzubilden, daß es universeller einsetzbar ist.

Diese Aufgabe wird erfindungsgemäß durch ein lokales Operationsnetzwerk gemäß Patentanspruch 1 gelöst, insbesondere dadurch, daß ein Rahmentaktgenerator einen durch eine Folge von Datenrahmen definierter Bit-Länge festgelegten Rahmentakt sendet, daß dieser Rahmentakt zum zentralen Sternkoppler geleitet wird, daß die zeitliche Abfolge der Datenrahmen des Rahmentaktes im zentralen Sternkoppler einen die Signalverarbeitung der weiteren Teilnehmer des lokalen Operationsnetzwerkes festlegenden Referenzrahmentakt definiert, daß die weiteren Teilnehmer des lokalen Operationsnetzwerks jeweils einen individuellen Rahmensendetakt bestimmen, derart, daß die jeweils von einem bestimmten Teilnehmer gesendete Nachricht unter Berücksichtigung der Signallaufzeit vom sendenden Teilnehmer zum zentralen Sternkoppler in letztgenanntem zu dem Zeitpunkt relativ zum Referenzrahmentakt eintrifft, zu dem diese Nachricht in den im zentralen Sternkoppler vorliegenden Datenrahmen aufzunehmen ist, und daß der die Nachrichten der Teilnehmer enthaltende Datenrahmen zu allen Teilnehmern geleitet wird.

Erfindungsgemäß ist also vorgesehen, daß die einzelnen Teilnehmer des lokalen Operationsnetzwerks den Zeitpunkt, zu dem sie ihre Nachrichten an den zentralen Sternkoppler absenden, unter Berücksichtigung der Signallaufzeit vom sendenden Teilnehmer zum zentralen Sternkoppler bestimmen. Durch diese Maßnahme ist in besonders vorteilhafter Art und Weise garantiert, daß die Nachrichten der sendenden Teilnehmer genau zu dem Zeitpunkt im zentralen Sternkoppler eintreffen, zu dem sie komplikationslos in den Datenrahmen eingefügt werden können. Von besonderem Vorteil ist hier außerdem, daß die Bestimmung der Signallaufzeit zwischen sendendem Teilnehmer und zentralem Sternkoppler für jeden Teilnehmer individuell erfolgt, so daß eine Veränderung der Übertragungsstrecke dynamisch erfassbar ist. Diese individuelle, dynamische Signallaufzeitkompensation hat den Vorteil, daß das erfindungsgemäße lokale Operationsnetzwerk flexibel im Hinblick auf die Anordnung der Teilnehmer im lokalen Operationsnetzwerk ist, woraus eine universelle Einsetzbarkeit resultiert. Die individuelle und dynamische Signallaufzeitkompensation besitzt außerdem den Vorteil, daß Alterungserscheinungen der Übertragungsstrecken leicht kompensiert werden können.

Von besonderem Vorteil ist auch, daß der Rahmensendetakt der einzelnen Teilnehmer auf einen zentralen Referenzrahmentakt bezogen ist, welcher vorzugsweise von einem als "Master-Teilnehmer" fungierenden Teilnehmer des lokalen Operationsnetzwerkes implizit erzeugt wird. Durch diese erfindungsgemäße Maßnahme ist es besonders einfach möglich, einen Referenztakt für das gesamte lokale Operationsnetzwerk zu definieren.

Eine weitere vorteilhafte Weiterbildung der Erfindung sieht vor, daß als Rahmentaktgenerator ein Teilnehmer des Bussystems fungiert. Außerdem ist von Vorteil, daß außer diesem "Master-Teilnehmer" noch mindestens ein weiterer Teilnehmer des lokalen Operationsnetzwerks hardwaremäßig derart ausgestattet ist, daß er subsidiär die Rolle des Rahmentaktgenerators übernehmen kann. Hierzu ist beim erfindungsgemäßen Lokalen Operationsnetzwerk vorgesehen, daß dieser subsidiäre "Master-Teilnehmer" seinerseits eine Rahmentaktkennung sendet, wenn er nicht innerhalb eines bestimmten Zeitintervalls ab Aktivierung des Lokalen Operationsnetzwerkes einen Rahmentakt des primären "Master-Teilnehmers" empfängt. Vorzugsweise sind aber alle Teilnehmer des lokalen Operationsnetzwerks in der Lage, die Rolle des primären "Master-Teilnehmers" übernehmen zu können. Durch diese erfindungsgemäße Maßnahme wird in besonders vorteilhafter Art und Weise eine erhöhte Systemsicherheit erreicht.

Eine weitere vorteilhafte Weiterbildung der Erfindung sieht vor, daß jeder Teilnehmer zur Signallaufzeitkompensation und damit zur Bestimmung seines Rahmensendetaktes relativ zu seinem Rahmenempfangstakt eine Testsequenz aussendet und die Zeitdauer bestimmt, welche bis zu ihrem Empfang verstreicht. Auf diese Art und Weise ist eine besonders einfache Ermittlung der Signallaufzeit möglich, aus der sich dann leicht der Rahmensendetakt bestimmen läßt.

Eine vorteilhafte Weiterbildung der Erfindung sieht vor, daß jeder Teilnehmer des lokalen Operationsnetzwerkes nach dem Einschalten der Betriebsspannung einen Selbsttest durchführt, der gewährleistet, daß alle Komponenten einwandfrei funktionieren. Durch diese Maßnahme wird in vorteilhafter Art und Weise gesichert, daß nur voll funktionsfähige Teilnehmer an der Systemkommunikation des lokalen Operationsnetzwerks teilnehmen.

Eine weitere vorteilhafte Weiterbildung der Erfindung sieht vor, daß die Datenrahmen ein synchrone Dienste vermittelndes synchrones Rahmenmodul und ein asynchroner Dienste übertragendes asynchrones Rahmenmodul aufweisen. Diese hybride Datenrahmenstruktur erlaubt es in besonders vorteilhafter Art und Weise, innerhalb eines einzigen Datenrahmens des erfindungsgemäßen Operationsnetzwerks sowohl synchrone als auch asynchrone Dienste zu übertragen, wodurch der universelle Einsatzbereich des erfindungsgemäßen Operationsnetzwerks noch weiter erhöht wird.

Eine weitere vorteilhafte Weiterbildung der Erfindung sieht vor, daß Teilnehmer des lokalen Operationsnetzwerks über einen sekundären Sternkoppler an den zentralen Sternkoppler angeschlossen sind. Diese erfindungsgemäße Maßnahme hat den Vorteil, daß die Anzahl der Übertragungsleitungen drastisch reduziert wird.

Eine weitere vorteilhafte Weiterbildung der Erfindung sieht vor, daß mindestens ein Teilnehmer des lokalen Operationsnetzwerks als Multiplexer/Demultiplexer ausgeführt ist. Dies erlaubt es in vorteilhafter Art und Weise, daß mehrere an diesem Teilnehmer angeschlossene Informationsquellen und/oder Informationssenken zu einer modularen Einheit zusammenfassbar sind.

Weitere Einzelheiten der Erfindung sind dem Ausführungsbeispiel zu entnehmen, welches im folgenden anhand der Zeichnungen beschrieben wird. Es zeigen:
- Figur 1: Ein Ausführungsbeispiel eines lokalen Operationsnetzwerks;
- Figur 2: eine schematische Darstellung des Synchronisationsprozeßes eines Teilnehmers des lokalen Operationsnetzwerkes;
- Figur 3: eine schematische Darstellung der Bestimmung der Signallaufzeiten;
- Figur 4: eine schematische Darstellung des Synchronisationsprozedur des gesamten lokalen Operationsnetzwerks;
- Figur 5: ein Blockschaltbild des Sende-/Empfangsteils eines Teilnehmers.

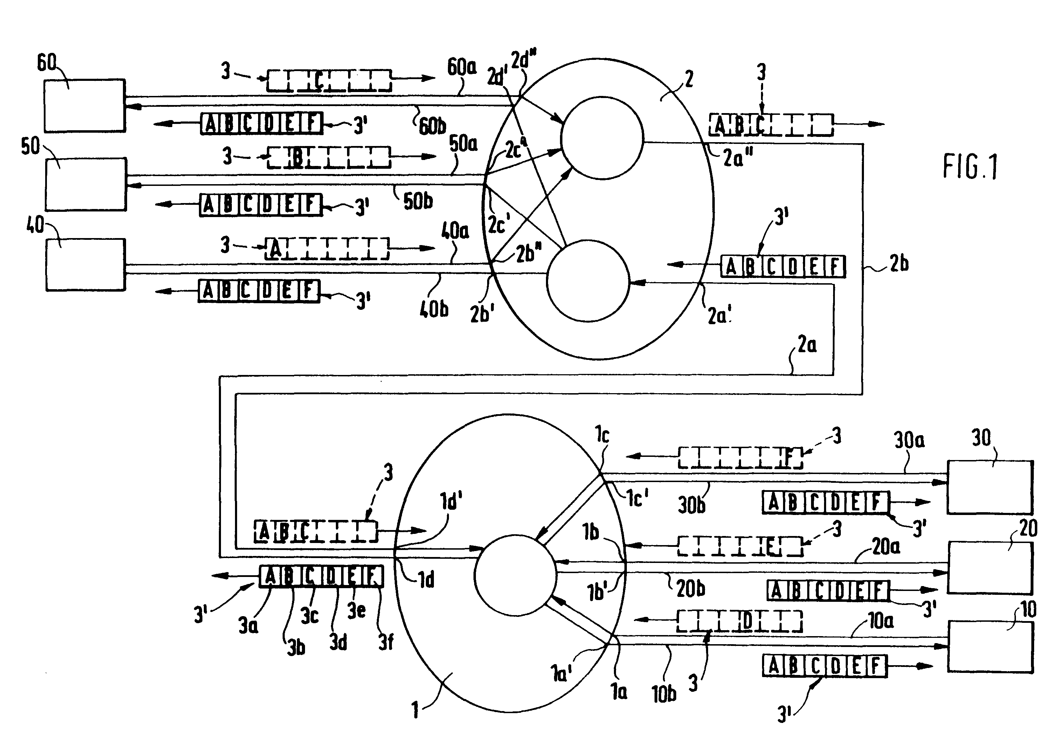

Das in Figur 1 dargestellte Ausführungsbeispiel eines lokalen Operationsnetzwerks weist einen optischen zentralen Sternkoppler 1 auf, an den über als Busleitungen fungierende Glasfasern 10a,10b,20a,20b und 30a,30b drei Teilnehmer 10,20 und 30 angeschlossen sind. Desweiteren ist an den optischen zentralen Sternkoppler 1 über weitere Glasfasern 2a,2b ein optischer sekundärer Sternkoppler 2 angeschlossen, welcher wiederum über optische Glasfasern 40a,40b,50a,50b und 60a,60b mit drei Teilnehmern 40,50 und 60 des lokalen Operationsnetzwerks verbunden ist.

Der zentrale Sternkoppler 1 ist dabei derart ausgeführt, daß ein an einem seiner Eingänge 1a-1d auftretendes optisches Signal zu allen Ausgängen 1a'-1d' geleitet wird. Bspw. wird das von dem ersten Teilnehmer 10 über die optische Glasfaser 10a zum Eingang 1a geleitete optische Signal sowohl zu dem zum Eingang 1a korrellierten Ausgang 1a' als auch zu den übrigen Ausgängen 1b'-1d' geleitet. Entsprechendes gilt für den zweiten und dritten Teilnehmer 20 und 30 sowie für den sekundären Sternkoppler 2.

Im Unterschied zum zentralen Sternkoppler 1 ist der sekundäre Sternkoppler 2 derart ausgebildet, daß ein an einem beliebigen Eingang 2a'-2d' auftretendes Signal zum Ausgang 2d", also zu dem Ausgang, der mit dem zentralen Sternkoppler 1 verbunden ist, geleitet wird. In entsprechender Art und Weise wird ein am Ausgang 1d' des zentralen Sternkopplers 1 auftretendes und über die Glasfaser 2a zum Eingang 2a' des sekundären Sternkopplers 2 geleitete Signal zu den Ausgängen 2b"-2d", welche mit den Teilnehmern 40-60 des lokalen Operationsnetzwerkes gekoppelt sind, geleitet.

Die konstruktive Ausbildung des als aktiver oder passiver optischer Stern ausgeführten zentralen Sternkopplers 1 und des sekundären Sternkopplers 2 ist dem Fachmann aufgrund der obigen Funktionsbeschreibung ersichtlich, so daß sich weitere Ausführungen hierzu erübrigen.

Die an den zentralen Sternkoppler 1 und den sekundären Sternkoppler 2 angeschlossenen Teilnehmer 10-60 des lokalen Operationsnetzwerkes dienen dazu, beliebige elektrische und/oder logische Verhältnisse der diesen Teilnehmern nachgeschalteten, in Figur 1 nicht gezeigten Informationsquellen und/oder -senken an das auf optischer Basis arbeitende lokale Operationsnetzwerk anzupassen. Abhängig vom vorgesehenen Einsatzzweck dieser Teilnehmer des lokalen Operationsnetzwerkes sind verschiedene Ausbildungsformen möglich. Die nachstehend beschriebene Ausführungen der einzelnen Teilnehmer 10-60 besitzt nur beispielhaften Charakter und ist nicht dahingehend zu verstehen, daß die einem bestimmten Teilnehmer zugeordnete Funktion die Allgemeinheit der dieser Auflistung erfolgenden Überlegungen einschränkt.

Der erste Teilnehmer 10 ist als universelle Schnittstelle ausgebildet, die dazu dient, die Verbindung zwischen beliebigen digital oder analog arbeitenden Sensoren/Aktoren (nicht dargestellt) einerseits und beliebigen anderen Informationsquellen oder -senken des lokalen Operationsnetzwerks herzustellen. Er setzt also die von den Sensoren erzeugten sensorspezifischen Signale in optische Datensignale um, die im lokalen Operationsnetzwerk ausbreitungsfähig sind. Andererseits dient der erste Teilnehmer 10 auch dazu, die ihm über die optische Fasern des lokalen Operationsnetzwerkes zugeleiteten optischen Datensignale in die spezifischen Aktorsignale umzusetzen. Durch einen als universelle Schnittstelle ausgebildeten ersten Teilnehmer 10 des lokalen Operationsnetzwerks ist es also besonders einfach möglich, bereits bekannte Sensor-/Aktormodule ohne eine spezielle Anpassung derselben an das lokale Operationsnetzwerk anzukoppeln.

Die weiteren Teilnehmer 20-60 sind als spezielle Schnittstellen ausgeführt, die für ein spezielles Einsatzgebiet optimal angepasst sind. Der zweite Teilnehmer 20 ist als CAN-Schnittstelle ausgebildet und dient zur Integration eines externen CAN-Busses. Innerhalb diesen externen CAN-Busses wirkt der zweite Teilnehmer 20 wie ein gleichberechtigter CAN-Teilnehmer und vertritt innerhalb dieser durch das CAN-Bussystem gebildeten CAN-Insel die Empfangsstation, welche nach dem Eintreffen eines CAN-Bussignals ein Acknowledge-Feld in das CAN-Busprotokoll einträgt. Seitens des optischen Lokalen Operationsnetzwerke wirkt er als Sender, d.h. der zweite Teilnehmer 20 kann Signale, die er über das Lokale Operationsnetzwerk erhält, an die Stationen seiner CAN-Insel weitergeben.

Der als CAN-Schnittstelle fungierende zweite Teilnehmer 20 ist dabei derart ausgebildet, daß er alle Signale, welche von der CAN-Insel oder dem optischen lokalen Operationsnetzwerk zur Verfügung gestellt werden, bearbeiten kann. Es ist also dem zweiten Teilnehmer 20 auf besonders einfache Art und Weise möglich, die bereits vorhandene Sensoren/Aktoren, die auf dem ISO-Standard CAN beruhen, in das beschriebene lokale Operationsnetzwerk einzubinden.

Der dritte Teilnehmer 30 ist als FIFO-Schnittstelle ausgebildet und dient als Datenerfassungseinheit, die extern zugeführte Informationen aufnehmen und zwischenspeichern sowie seriell über das optische Netzwerk weiterleiten kann.

Der vierte Teilnehmer 40 nimmt Audio-/Videosignale über einen in Figur 1 nicht dargestellten Antenneneingang auf und setzt sie in optische Datensignale um, die im optischen lokalen Operationsnetzwerk ausbreitungsfähig sind. Außerdem dient er dazu, die von den Glasfasern des lokalen Operationsnetzwerks an den vierten Teilnehmer 40 geleiteten optischen Datensignale derart umzuwandeln, daß sie für die in Figur 1 ebenfalls nicht gezeigten Audio/Video-Endgeräte, welche am vierten Teilnehmer 40 angeschlossen sind, verarbeitbar sind. Da beim beschriebenen lokalen Operationsnetzwerk vorgesehen ist, daß die von einem Teilnehmer in das Netzwerk eingespeisten optischen Datensignale zu allen anderen Teilnehmern geleitet werden, weist der vierte Teilnehmer 40 desweiteren Einrichtungen auf, die es ihm erlauben, die von anderen Teilnehmern gelieferten Datensignale, welche für den Audio/Video-Einsatz von Bedeutung sind, zu bearbeiten und zur Steuerung von Komfortfunktionen der Audio/Video-Endgeräte einzusetzen. Beispielhafterweise sei hier die geschwindigkeitsabhängige Regelung der Lautstärke eines Autoradios erwähnt, in die als Regelgröße für die Anhebung oder Absenkung des Lautstärkepegels die Fahrgeschwindigkeit des Automobils eingeht.

Der fünfte Teilnehmer 50 wirkt als Kommunikationsschnittstelle, welche mobile Funksignale (GSM,DCS 1800, DECT), die über einen in Figur 1 nicht gezeigten Antenneneingang zum fünften Teilnehmer 50 gelangen, in das Signalformat des lokalen Operationsnetzwerkes umsetzt bzw. die von diesem übertragenen optischen Datensignale in für die am fünften Teilnehmer 50 angeschlossenen Endgeräte signifikanten Signale zurückverwandelt.

Der sechste Teilnehmer 60 ist als Armaturen-Schnittstelle ausgestaltet. Er gestattet die Anbindung einer zentralen Anzeigeeinheit (nicht gezeigt) und stellt alle erforderlichen Sensorsignale, die auf dem Operationsnetzwerk verfügbar sind, zur Anzeige bereit.

Es ist aber auch möglich, eine Kopplung und/oder eine Kombination der Funktionen der oben beschriebenen Teilnehmer 10-60 in einer einzigen Funktionseinheit vorzusehen.

Die auf das jeweilige spezifische Anwendungsgebiet abgestellte Ausbildung der o.g. Teilnehmer erlaubt es vorteilhafterweise, die Teilnehmerstellen des lokalen Operationsnetzwerkes besonders kostengünstig auszubilden, wodurch sich eine preisgünstige Realisierung desselben ergibt.

Die Ausbildung der Teilnehmer 10-60 des lokalen Operationsnetzwerks ist weiterhin davon abhängig, ob durch sie nur ein einziges Endgerät in das lokale Operationsnetzwerk eingebunden werden soll, oder ob über einen bestimmten Teilnehmer 10-60 eine Mehrzahl von Endgeräten an das lokale Operationsnetzwerk angekoppelt werden sollen. Im erstgenannten Fall ist es ausreichend, den Teilnehmer 10-60 derart auszubilden, daß er - wie beschrieben - die Umsetzung der endgerätespezifische Signale in das Datenformat des lokalen Operationsnetzwerkes bzw. umgekeht gestattet.

Sollen jedoch mehrere Endgeräte angekoppelt werden, so ist es von Vorteil, den entsprechenden Teilnehmer 10-60 als Multiplexer/Demultiplexer auszubilden, welcher mittels eines bekannten Multiplexverfahrens die in das lokale Operationsnetz einzuspeisenden Signale der angeschlossenen Endgeräte entsprechend aufbereitet bzw. die vom lokalen Operationsnetzwerk an den bestimmten Teilnehmer geleiteten optischen Datensignale in die endgerätespezifischen Signale demultiplext. Außerdem kann vorgesehen sein, daß der Teilnehmer 10-60 des lokalen Operationsnetzwerkes eine interne Kommunikation der an ihm angeschlossenen Endgeräte ermöglicht, so daß ein modularer Aufbau erreicht wird.

Die Grundzüge der Funktionsweise des lokalen Operationsnetzwerkswerden ebenfalls anhand der Figur 1 erläutert. Details der Funktionsweise werden daran anschließend anhand der folgenden Figuren erklärt:

Der wesentlichen Grundgedanke des Operationsnetzwerks besteht nun darin, daß ein Teilnehmer des lokalen Operationsnetzwerks - hier annahmegemäß der erste Teilnehmer 10 - als Rahmentaktgenerator fungiert und eine Folge von Datenrahmen 3 fester Bit-Länge erzeugt, die diesen Rahmentakt festlegen. Diese Datenrahmen 3 werden über die Glasfaser 10a zum Eingang 1a des zentralen Sternkopplers 1 geleitet. Im zentralen Sternkoppler 1 werden dann die Nachrichten aller Teilnehmer 10-60 des lokalen Operationsnetzwerks im Datenrahmen 3 zusammengefaßt. Dies bedingt, daß die Daten jedes einzelnen Teilnehmers 10-60 genau rechtzeitig, d.h. zu dem Zeitpunkt im zentralen Sternkoppler eintreffen, zu dem sie in den Datenrahmen 3 eingefügt werden sollen. Um dies besonders einfach zu ermöglichen, wird als Zeitreferenz ein Referenzrahmentakt definiert. Als dieser Rahmenreferenztakt wird das Zeitraster gewählt, welches durch das Eintreffen der vom ersten Teilnehmer 10 erzeugten Datenrahmen im zentralen Sternkoppler 1 festgelegt wird. Alle übrigen Teilnehmer 20-60 richten ihre Signalverarbeitung auf den Referenzrahmentakt derart aus, daß unter Berücksichtigung der Signallaufzeiten vom entsprechenden Teilnehmer 20-60 zum zentralen Sternkoppler 1 das rechtzeitige Eintreffen ihrer Nachricht (s.o.) garantiert ist. Im einzelnen geschieht dies wie folgt:

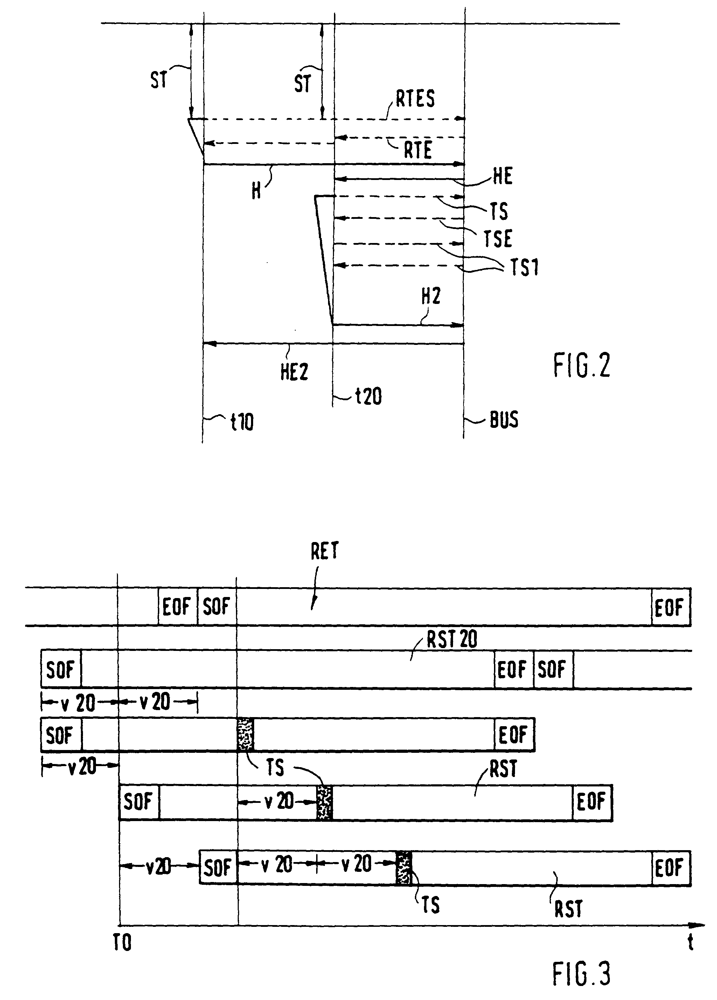

Der als Rahmentaktgenerator fungierende erste Teilnehmer 10 erzeugt einen Datenrahmen 3 definierter Bit-Länge, der durch Rahmenkennungen SOF und EOF (siehe Figur 3) gekennzeichnet und begrenzt ist. Der zum Zeitpunkt T0-v10 erzeugte Datenrahmen 3 trifft dann zum Zeitpunkt T0 im zentralen Sternkoppler 1 ein. Hierbei bezeichnet die Variable v10 die Signallaufzeit zwischen dem ersten Teilnehmer 10 einerseits und dem zentralen Sternkoppler 1 andererseits. Gleichzeitig fügt der erste Teilnehmer 10 seine auf das lokale Operationsnetzwerk zu übertragende Nachricht D in den Datenrahmen 3 ein, wobei angenommen wird, daß dem ersten Teilnehmer 10 ein viertes Segment 3d des in sechs Segmente 3a-3f unterteilten Datenrahmens 3 zugeordnet ist. Die Unterteilung des Datenrahmens 3 in sechs Segmente 3a-3f ist nicht notwendigerweise von physikalischer Natur. Diese Art der Unterteilung wurde nur der einfacheren und prägnanteren Beschreibung halber gewählt, um so einfacher die relative Position der in den Datenrahmen 3 einzufügenden Nachricht D kennzeichnen zu können. Der Umstand, daß vom ersten Teilnehmer 10 in der Senderichtung erster Teilnehmer 10 - zentraler Sternkoppler 1 eine explizite Rahmenstruktur übertragen wird, ist in Figur 1 dadurch gekennzeichnet, daß der vom ersten Teilnehmer 10 zum zentralen Sternkoppler 1 übertragene Datenrahmen 3 durchgehend gezeichnet ist.

Die den Beginn eines Datenrahmens 3 kennzeichnende Rahmenkennung SOF erreicht den zentralen Sternkoppler 1 nach einer Signallaufzeit von v10. Dieser Zeitpunkt T0 - das Eintreffen der Rahmenkennung SOF des vom ersten Teilnehmer 10 erzeugten Datenrahmens 3 - wird nun als Referenzzeitpunkt für die gesamte Signalverarbeitung im lokalen Operationsnetzwerk definiert. Entsprechendes gilt für die den Datenrahmen 3 nachfolgenden Datenrahmen, so daß der vom ersten Teilnehmer 10 erzeugte, durch die Folge von Datenrahmen 3 festgelegte Rahmentakt einen Referenzrahmentakt des Lokalen Operationsnetzwerkes des lokalen Operationsnetzwerks definiert.

Um nun zu gewährleisten, daß die von den weiteren Teilnehmern 20-60 des lokalen Operationsnetzwerks gesendeten Nachrichten unter Berücksichtigung der Signallaufzeiten vom entsprechenden Teilnehmer zum zentralen Sternkoppler 1 in diesem zum entsprechenden Zeitpunkt eintreffen, muß ein die sendeseitige Signalverarbeitung der einzelnen Teilnehmer 20-60 steuernder Rahmensendetakt auf den Referenzrahmentakt abgestimmt werden.

Bei der weiteren Beschreibung dieser Synchronisation wird der einfacheren Erläuterung halber angenommen, daß dem zweiten Teilnehmer 20 ein fünftes Segment 3e des Datenrahmens 3, dem dritten Teilnehmer 30 ein sechstes Segment 3f, dem vierten Teilnehmer 40 ein erstes Segment 3a, dem fünften Teilnehmer 50 ein zweites Segment 3b und dem sechsten Teilnehmer 60 ein drittes Segment 3c des Datenrahmens 3 zugeordnet ist.

Um zu gewährleisten, daß die vom zweiten Teilnehmer 20 zu übertragenden Nachricht E zu dem Zeitpunkt, zu dem sie im zentralen Sternkoppler 1 in das fünfte Segment 3e des vom ersten Teilnehmer 10 generierten Datenrahmens 3 eingefügt werden soll, zu diesem gelangen, muß der zweite Teilnehmer seine in das lokale Operationsnetzwerk einzuspeisende Dateninformation zum Zeitpunkt T0-v20+e absenden, wobei v20 die Signallaufzeit zwischen dem zweiten Teilnehmer 20 und dem zentralen Sternkoppler 1 und e die relative Position des fünften Segments 3e im Datenrahmen bezeichnet.
In entsprechender Art und Weise muß der dritte Teilnehmer 30 seine Nachricht F zu einem Zeitpunkt T0-v30+f absetzen, wenn er gewährleisten will, daß diese in den ihm zugeordneten fünften Segment 3f des Datenrahmens 3 aufgenommen wird. Hierbei bezeichnet die Variable v30 die Signallaufzeit zwischen dem dritten Teilnehmer 30 einerseits und dem zentralen Sternkoppler 1 andererseits. Mit f ist wiederum die relative Position des fünften Segments 3f im Datenrahmen 3 bezeichnet.

Für den Fachmann ist nun aufgrund obiger Ausführungen klar ersichtlich, daß der vierte, fünfte und sechste Teilnehmer 40,50 und 60 die Datenübertragung zu den Zeitpunkten T0-v0-v40, T0-v0-v50+b und T0-v0-v60+c initieren muß, wenn gewährleistet sein soll, daß die entsprechenden Nachrichten A,B und C in das erste, zweite und dritte Segment 3a,3b und 3c des Datenrahmens 3 geschrieben werden. Hierbei bezeichnen die Variablen v40,v50 und v60 die Signallaufzeiten zwischen dem vierten, fünften und sechsten Teilnehmer 40,50 und 60 einerseits und dem sekundären Sternkoppler 2 andererseits. Die Variable v0 bezeichnet dann die Laufzeit der Signale zwischen dem sekundären Sternkoppler 2 und dem primären Sternkoppler 1. Mit b und c ist wiederum die relative Position der Segmente 3b und 3c im Datenrahmen 3 gewährleistet.

Hierbei ist noch anzuführen, daß von den Teilnehmer 20-60 des lokalen Operationsnetzwerks in der Senderichtung Teilnehmer - zentraler Sternkoppler 1 die Daten ohne explizite Rahmenstruktur übertragen werden. Dies ist in Figur 1 durch die strichliert gezeichneten Datenrahmen 3 dargestellt, welche lediglich der Übersichtlichkeit halber und zur Darstellung der Relativposition der Nachrichten A,B,C,E und F eingezeichnet wurden.

Durch die o.g. Maßnahme ist nun gewährleistet, daß die einzelnen Teilnehmer 10-60 des lokalen Operationsnetzwerks ihre Daten genau zu dem Zeitpunkt absenden, zu dem unter Berücksichtigung der Signallaufzeiten zwischen dem jeweils sendenden Teilnehmer 10-60 und dem zentralen Sternkoppler 1 diese genau zum entsprechenden Einfüge-Zeitpunkt im zentralen Sternkoppler 1 vorliegen. Somit wird in besonders einfacher Art und Weise erreicht, daß der Datenrahmen 3 mit den Nachrichten A-F der einzelnen Teilnehmer 10-60 gefüllt werden kann, ohne daß Kollisionen auftreten.

Ein mit den Nachrichten A-F der einzelnen Teilnehmer 10-60 gefüllter Datenrahmen 3' wird nun vom zentralen Sternkoppler 1 zu allen Teilnehmern 10-60 des lokalen Operationsnetzwerkes gesendet. Die vom ersten Teilnehmer 10 vorgegebene Rahmenstruktur wird von diesen über die Rahmenkennungen SOF und EOF erkannt. Das durch die zeitliche Abfolge der empfangenen Datenrahmen 3' vorgegebene Zeitraster wird als Rahmenempfangstakt der empfangenden Teilnehmer 10-60 definiert.

Der Datenrahmen 3' trifft nun - wie es aus Figur 1 ersichtlich ist - zu den Zeitpunkten T0+v0+v40 bzw. T0+v0+v50 bzw. T0+v0+v60 beim vierten bzw. fünften bzw. sechsten Teilnehmer 40-60 und zu den Zeitpunkten T0+v10 bzw. T0+v20 bzw. T0+v30 beim ersten bzw. zweiten bzw. dritten Teilnehmer 10-30 des lokalen Operationsnetzwerkes ein. Da hierbei ein Datenrahmen 3' mit expliziter Rahmenstruktur übermittelt wird, ist dieser in Figur 1 durchgezogen dargestellt.

Die Einzelheiten des oben grundsätzlich beschriebenen Lokalen Operationsnetzwerkes wird im folgenden anhand der Figuren 2 bis 4 detailierter erläutert: In Figur 2 ist schematisch die Synchronisationsprozedur zweier Teilnehmer 10 und 20 des lokalen Operationsnetzwerkes dargestellt:

Bevor die eigentliche Synchronisationsprozedur der einzelnen Teilnehmer 10-60 des lokalen Operationsnetzwerkes durchgeführt wird, ist vorgesehen, daß jeder Teilnehmer 10-60 einen Selbsttest durchführt. Dieser muß gewährleisten, daß alle seine elektrischen und optischen Komponenten einwandfrei funktionieren. Die Durchführung eines derartigen Selbsttestes sowie seine hardwaremäßige Implementation ist dem Fachmann bekannt, so daß sich weitere Ausführungen an dieser Stelle erübrigen. Durch diesen Selbsttest wird in vorteilhafter Art und Weise gesichert, daß nur voll funktionsfähige Teilnehmer an der Systemkommunikation innerhalb des lokalen Operationsnetzwerkes teilhaben. Das lokale Operationsnetzwerk konfiguriert sich also in vorteilhafter Art und Weise bei jedem Neustart selbst.

Dieser Selbsttest der einzelnen Teilnehmer ist in Figur 2 durch die Zeitspanne ST auf den vertikal verlaufenden Zeitachsen t10 und t20, welche die zeitliche Abfolge der einzelnen Synchronisationsschritte der Teilnehmers 10 und 20 zeigen, dargestellt.

Außerdem ist vorgesehen, daß der Selbsttest eines jeden Teilnehmers 10-60 noch zeitüberwacht wird, d.h. daß jeder Teilnehmer 10-60, der nicht innerhalb der gewissen vorgegebenen Zeitspanne ST einen positiven Abschluß des Selbsttestes feststellt, vom darauffolgenden Aufbau des Lokalen Operationsnetzwerkes ausgeschlossen wird.

Im ersten Schritt der eigentlichen Synchronisationsprozedur wird der Teilnehmer festgelegt, der als Rahmentaktgenerator fungiert, den Rahmentakt sendet und damit implizit den Referenzrahmentakt erzeugt. Hierzu kann vorgesehen sein, daß diese Aufgabe hardwaremäßig einem einzigen Teilnehmer des lokalen Operationsnetzwerkes zugeordnet ist. Diese Möglichkeit zeichnet sich durch ihre besonders preisgünstige hardwaremäßige Implementation aus.

Von besonderem Vorteil ist es jedoch, das lokale Operationsnetzwerk selbstorganisierend auszustatten, d.h. daß mehrere oder vorzugsweise alle Teilnehmer 10-60 derart ausgeführt sind, daß sie die Funktion des Rahmentaktgenerators übernehmen können. Diese Mehrfachauslegung erhöht die Systemsicherheit beträchtlich, da beim Ausfall eines oder mehrerer Teilnehmer die verbleibenden Teilnehmer des lokalen Operationsnetzwerkes in der Lage sind, die Selbstkonfiguration und Selbstorganisation für den noch funktionsfähigen Anteil des lokalen Operationsnetzwerks durchzuführen.

Hierzu ist vorgesehen, daß netzwerksintern eine hierarchische Abfolge der einzelnen Teilnehmer 10-60 festgelegt ist, derart, daß ein rangniedrigere Teilnehmer die Funktion des Rahmentaktgenerators übernimmt, wenn er innerhalb eines definierten Zeitintervalls keine Rahmentaktkennung eines hierarchisch übergeordneten Teilnehmer empfängt.

Bei dem hier beschriebenen Ausführungsbeispiel ist vorgesehen, daß primär der erste Teilnehmer 10 als Rahmentaktgenerator fungiert. Subsidiär soll bei einem Ausfall des ersten Teilnehmers 10 der zweite Teilnehmer 20 diese Funktion übernehmen, etc.

In diesem ersten Schritt des eigentlichen Synchronisationsprozesses des Lokalen Operationsnetzwerkes sendet - wie aus Figur 2 ersichtlich ist - der erste Teilnehmer 10 die die Datenrahmen 3 und somit den Rahmentakt festlegenden Rahmenkennungen SOF und EOF über den zentralen Sternkoppler 1 zu den anderen Teilnehmern 20-60 des lokalen Operationsnetzwerks. Dieser Vorgang ist in Figur 2 durch einen strichliert dargestellten Pfeil RTS repräsentiert, welcher von der Zeitachse t10 des ersten Teilnehmers 10 zu der in Figur 2 am rechten Rand verlaufenden Linie BUS verläuft, welche symbolisch den Bus des lokalen Operationsnetzwerks repräsentiert. Der Empfang der Rahmenkennung durch den zweiten Teilnehmer 20 ist in Figur 2 durch den von der Linie BUS zur Zeitachse t20 des zweiten Teilnehmers 20 verlaufenden Pfeil RTE dargestellt. Der Empfang der Rahmenkennungen SOF und EOF durch den zweiten Teilnehmer 20 sowie durch die weiteren Teilnehmer 30-60 bewirkt, daß diese nun nicht mehr die Funktion des Rahmentaktgenerators übernehmen.

Der erste Teilnehmer 10 sendet ein Signal "hallo", welches in Figur 2 durch den durchgehend gezeichneten Pfeil "H" dargestellt ist. Der zweite Teilnehmer 20 empfängt das Signal "hallo". Dies ist in Figur 2 durch den von der Linie BUS zur Zeitachse t20 des zweiten Teilnehmers 20 verlaufenden, durchgezogen gezeichneten Pfeil "HE" dargestellt. Dies bewirkt, daß nun der zweite Teilnehmer 20 beginnt, sich zu synchronisieren, d.h. der zweite Teilnehmer 20 bestimmt seine Signallaufzeit v20 zum zentralen Sternkoppler 1. Diese Bestimmung der Signallaufzeit wird nun anhand der Figur 2 und insbesondere der Figur 3 erläutert.

Der zweite Teilnehmer 20 bestimmt aus den die Datenrahmen 3' begrenzenden Rahmenkennungen SOF und EOF seinen Rahmenempfangstakt RET (Figur 3) und sendet relativ zu diesem Rahmenempfangstakt RET eine Testsequenz TS zum zentralen Sternkoppler 1. Diese Testsequenz TS wird in dem zu diesem Zeitpunkt dort vorliegenden Datenrahmen 3 eingefügt und im Datenrahmen 3' wieder zurück zum zweiten Teilnehmer 20 geleitet. Dieser Vorgang ist in Figur 2 durch den strichlierten Pfeil TSE dargestellt. Der zweite Teilnehmer 20 bestimmt nun aus der Zeitdifferenz zwischen Absenden und Empfangen der Testsequenz TS die Signallaufzeit v20 und verschiebt daraufhin seinen Rahmensendetakt RST (Figur 3) entsprechend, so daß ein zum Referenzrahmentakt synchronisierter Rahmensendetakt RST20 (Figur 3) festgelegt ist.

Nach der Durchführung dieser Schritte, also nach Beendigung seine Synchronisierungsprozedur, sendet der zweite Teilnehmer 20 ein Signal "hallo 2" zum Bus, welches in Figur 2 durch den durchgezogenen Pfeil H2 dargestellt ist. Dieses Signal H2 wird über den zentralen Sternkoppler 1 zum ersten Teilnehmer 10 geleitet. Dieser Vorgang ist in Figur 2 durch den Pfeil HE2 dargestellt. Mit dem Empfang des Signals "hallo 2" durch den ersten Teilnehmer 10 ist der zweite Teilnehmer 20 im Lokalen Operationsnetzwerkes "angemeldet" und somit konfiguriert.

Zusätzlich kann noch vorgesehen sein, daß der zweite Teilnehmer 20 eine zweite Testsequenz TS1 (Figur 2) aussendet und wieder empfängt, um damit die erste Bestimmung der Signallaufzeit v20 verifizieren oder eine fehlerhafte oder fehlgeschlagene erste Bestimmung wiederholen zu können. Die erste Bestimmung der Signallaufzeit v20 kann insbesondere dann fehlschlagen, wenn das Testsignal TS von Rahmenkennungen SOF oder EOF überlagert wird. In diesem Fall ist für den zweiten Teilnehmer 20 eine eindeutige Bestimmung nicht möglich. Er sendet - wie angeführt- eine zweite Testsequenz zeitlich so verschoben, daß diese bei ihrer Ankunft garantiert zwischen den Rahmenkennungen SOF und EOF liegt. Eine deratige Vorgehensweise ist besonders in Hochgeschwindigkeitsdatennetzen von Vorteil, da bei diesen die exakte Bestimmung der Signallaufzeiten und die darauf basierende Signallaufzeitenkompensation erhebliche Bedeutung für die einwandfreie Funktion des lokalen Operationsnetzwerkes zukommt.

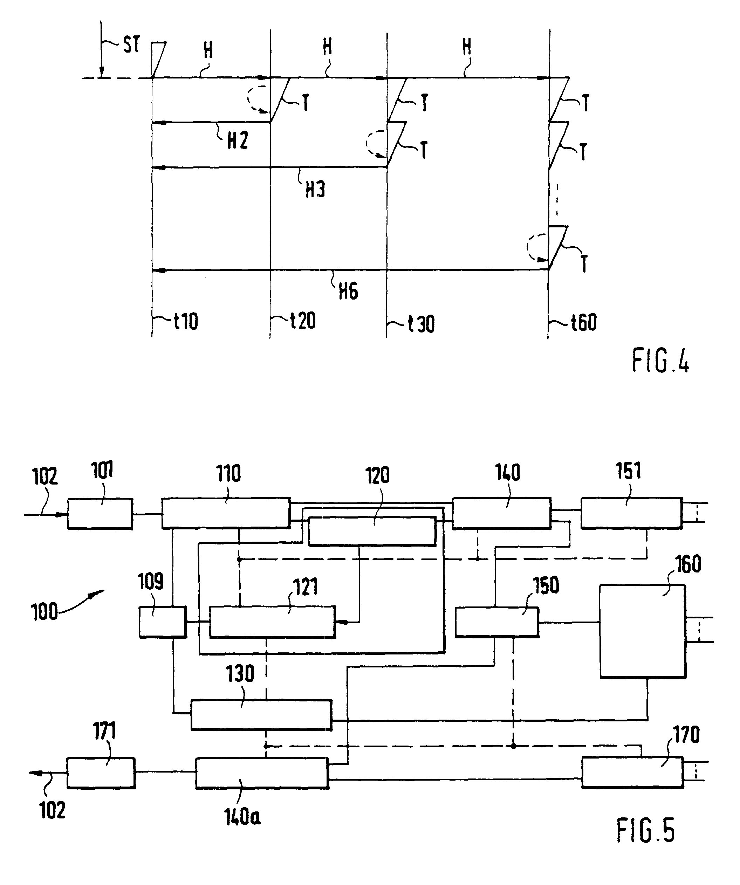

Die weiteren Schritte zur Synchronisation des gesamten lokalen Operationsnetzwerks werden anhand der Figur 4 erläutert. Die hierbei in jedem Teilnehmer ablaufenden, lediglich diesen Teilnehmer und den zentralen Sternkoppler 1 betreffenden Schritten entsprechenen denen bei der Synchronisation des zweiten Teilnehmers 20 beschriebenen, so daß es hier möglich ist, sich auf die Darstellung der lediglich das Gesamtsystem betreffenden Synchronisationsschritte zu beschränken. In Figur 4 repräsentieren die vertikal verlaufenden Linien t10,t20,t30 und t60 den zeitlichen Ablauf der Systemsynchronisation im ersten, zweiten, dritten und sechsten Teilnehmer 10,20,30 und 60. Die horizontalen Pfeile kennzeichnen die hierzu zwischen den einzelnen Teilnehmern 10-60 ausgetauschten Signale.

Die dem Teilnehmern 10-60 zugeordneten Zeitachsen t10-t60 der Figur 4 ist - wie bereits beschrieben - dargestellt, daß während des ersten Zeitabschnittes ST der Synchronisationsprozedur die Teilnehmer 10-60 ihren Selbsttest durchführen, so daß bei der Beschreibung der Figur 4 im weiteren davon ausgegangen wird, daß alle dargestellten Teilnehmer 10-60 voll funktionsfähig sind und daher an der Konfiguration des lokalen Operationsnetzwerkes teilnehmen. In diesem Zeitabschnitt ST wird außerdem - wie oben ausgeführt - der erste Teilnehmer 10 zu dem als Rahmentaktgenerator fungierende "Master-Teilnehmer" definiert, der die Rahmenkennungen zu den weiteren Teilnehmern 20-60 sendet. In Figur 4 ist ebenfalls die bereits beschriebene Aussendung des Signals "hallo" durch die mit H bezeichneten Pfeile dargestellt ist.

Das Eintreffen eines "hallo"-Signals H bei einem Teilnehmer 30-60 bewirkt, daß ein Timer gestartet wird. Nach Ablauf des durch den Timer festgelegten Zeitintervalls T beginnt der entsprechende Teilnehmer mit seiner Synchronisationsprozedur. Hierbei ist vorgesehen, daß die Anzahl der Timerstarts, die zwischen dem vom Teilnehmer 10 ausgesandten "hallo"-Signals H und dem Beginn der Synchronisationsprozedur eines bestimmten Teilnehmers vergehen, von Teilnehmer zu Teilnehmer variiert. Durch diese zeitliche Abstaffelung der einzelnen Synchronisationsprozeduren wird erreicht, daß sich die den erfolgreichen Abschluß der Synchronisierungsprozedur kennzeichnenden Teilnehmer-Meldungen nicht überlappen. So ist - wie aus Figur 4 ersichtlich ist - vorgesehen, daß der zweite Teilnehmer unmittelbar nach dem Empfang des "hallo"-Signals H des ersten Teilnehmers seine Synchronisierungsprozedur im Zeitintervall T durchführt und nach dessen Ablauf seine Teilnehmer-Kennung H2 zum ersten Teilnehmer sendet. Der dritte Teilnehmer 30 beginnt mit seiner Synchronisierungsprozedur - welche in Figur 4 durch einen strichlierten kreisförmigen Pfeil symbolisch dargestellt ist - erst nach Ablauf des ersten Zeitintervalls T und führt demgemäß diese Synchronisierungsprozedur während eines darauffolgenden zweiten Zeitintervalls T durch. Dementsprechend wartet der sechste und damit letzte Teilnehmer 60 des lokalen Operationsnetzwerks erst fünf Timerstarts, die jeweils die Zeitdauer T betragen, ab und beginnt erst in einem sechsten Zeitintervall T mit seiner Synchronisierungsprozedur. Nach deren Beendigung sendet er ein Signal "hallo 6" (in Figur 4 durch den Pfeil H6 dargestellt) zu ersten Teilnehmer 10.

Die obige Beschreibung des lokalen Operationsnetzwerks und dessen Synchronisation sind von der speziellen internen Struktur des verwendeten Datenrahmens 3 unabhängig. Besonders vorteilhaft ist es jedoch, einen Datenrahmen 3 zu verwenden, der ein synchrone Dienste vermittelndes synchrones Rahmenmodul und ein asynchrone Dienste vermittelndes asynchrones Rahmenmodul aufweist, wobei die durch ein vom ersten Teilnehmer 10 erzeugtes Teilungsmodul bewirkte Aufteilung des Datenrahmens 3 dynamisch variierbar ist. Durch diese Datenrahmen-Struktur ist es dann in besonders vorteilhafter Art und Weise möglich sowohl synchrone als auch asynchrone Dienste in einem einzigen Datenrahmen zu übertragen, wodurch sich eine besonders universelle Einsatzweise des Operationsnetzwerks ergibt. Ein derartiger modularer Aufbau eines Datenrahmens ist in der Parallelanmeldung "Rahmenstrukturiertes Bussystem" derselben Anmelderin beschrieben, auf die hiermit explizit Bezug genommen wird.

In Figur 5 ist nun ein Sende-/Empfangsteil 100 eines Teilnehmers dargestellt, welcher zur Verwendung mit dem beschriebenen lokalen Operationsnetzwerk besonders geeignet ist. Der Sende-/Empfangsteil weist einen O/E-Wandler 101 auf, welcher zur Umwandlung der über die Glasfaser 102 herangeführten optischen Datensignale in elektrische Signale dient. Dem O/E-Wandler 101 ist eine von einem Oszillator 109 getaktetes Synchronisationsschaltung 110 nachgeschaltet, welche den Rahmenempfangstakt ermittelt bzw. ihn im laufenden Betrieb kontrolliert.

Die Synchronisationsschaltung 110 ist mit einem Funktionsblock 120 verbunden, welcher zur Bestimmung der Signallaufzeit und damit der erforderlichen Verzögerungszeit des Rahmensendetakts zum Referenzrahmentakt dient. In der weiter oben bereits eingehend beschriebenen Art und Weise ermittelt der Funktionsblock 120 durch die Bestimmung der Zeitdifferenz zwischen dem Aussenden und'dem Eintreffen des Testsignals TS (Figur 2 und Figur 3) die Signallaufzeit zum zentralen Sternkoppler 1 und steuert dementsprechend ein Oszillator 109 getaktetes Verzögerungsglied 121 an. Das Verzögerungsglied 121 wirkt mit einem vom Oszillator 109 getakteten Rahmenstrukturgenerator/-überwacher 130 zusammen, welcher die Rahmenkennungen SOF und EOF generiert.

Mit der Synchronisationsschaltung 110 ist außerdem ein Modulselektor 140 verbunden. Der Modulselektor 140 führt die entsprechende Aufteilung des empfangenen Datenrahmens 3' in das synchrone und das asynchrone Rahmenmodul durch. Mit dem Modulselektor 140 ist ein Demultiplexer 151 verbunden, der als Interface zu den an den Teilnehmer angeschlossenen Informationsquellen oder -senken wirkt.

Der Modulselektor 140 ist außerdem mit einer von einem Mikroprozessor angesteuerten Zugriffssteuerung 150 verbunden, welche in Verbindung mit dem Modulselektor 140 den Empfang und in Verbindung mit einem weiteren Modulselektor 140a das Aussenden des asynchronen Rahmenmoduls steuert. Der Mikroprozessor 160 steuert außerdem den Rahmenstrukturgenerator/-überwacher 130 zur Erzeugung der Rahmenstruktur an.

Ein Multiplexer 170 dient als weiteres Interface zu den Informationsquellen/-senken des Teilnehmers. Ein E/O-Wandler 171 wandelt die elektrischen Signale des Sende/Empfangsteils in optische Signale um, welche im lokalen Operationsnetzwerk ausbreitungsfähig sind.

## Patentansprüche

1. Lokales Operationsnetzwerk, welches eine Anzahl von Teilnehmern (10-60) aufweist, die jeweils über eine Busleitung (10a, 10b; 20a, 20b; 30a, 30b; 40a, 2a, 40b, 2b; 50a, 2a, 50b, 2b; 60a, 2a, 60b, 22b) mit einem zentralen Sternkoppler (1) verbunden sind, um eine von einem Teilnehmer (10-60) ausgesendete Nachricht über den zentralen Sternkoppler (1) zu allen Teilnehmern (10-60) des lokalen Operationsnetzwerkes zu leiten,
**dadurch gekennzeichnet,**
**daß** ein Rahmentaktgenerator vorgesehen ist, der geeignet ist, einen durch eine Folge von Datenrahmen (3) definierter Bit-Länge festgelegten Rahmentakt (RT) zu generieren und auszusenden, daß der zentrale Sternkoppler (1) geeignet ist, den Rahmentakt (RT) zu empfangen und aus der zeitlichen Abfolge der Datenrahmen (3) des Rahmentaktes (RT) einen die Signalverarbeitung der Teilnehmer (10-60) des lokalen Operationsnetzwerkes festlegenden Referenzrahmentakt zu definieren, daß die Teilnehmer (20-60) jeweils geeignet sind, einen individuellen Rahmensendetakt (RST) derart zu bestimmen, daß die jeweils von einem bestimmten Teilnehmer (20-60) gesendete Nachricht (B-F) unter Berücksichtigung der Signallaufzeit vom sendenden Teilnehmer (20-60) zum zentralen Sternkoppler (1) in letztgenanntem zu dem definierten Zeitpunkt relativ zum Referenzrahmentakt eintrifft, zu dem diese Nachricht (B-F) in den im zentralen Sternkoppler (1) vorliegenden Datenrahmen aufzunehmen ist, und daß der zentrale Sternkoppler (1) geeignet ist, den die Nachrichten (A-F) der Teilnehmer (10-60) enthaltenen Datenrahmen (3') zu allen Teilnehmern (10-60) zu leiten.

2. Lokales Operationsnetzwerk nach Anspruch 1, **dadurch gekennzeichnet, daß** die Signallaufzeit (v20-v60) zwischen jedem einzelnen Teilnehmer (20-60) und dem zentralen Sternkoppler (1) bei jedem Start des Operationsnetzwerks dynamisch bestimmbar ist, und daß der Rahmensendetakt des Teilnehmers (20-60) um die ermittelte Signallaufzeit zeitlich zu ihrem Rahmenempfangstakt (RET) verschiebbar ist.

3. Lokales Operationsnetzwerk nach Anspruch 1 oder 2, **dadurch gekennzeichnet, daß** zur Bestimmung der Signallaufzeit (v20-v60) jeder Teilnehmer (20-60) geeignet ist, ein Testsignal (TS) zum zentralen Sternkoppler (1) zu senden, daß dieses Testsignal (TS) im gesendeten Datenrahmen (3') zum sendenden Teilnehmer (20-60) zurückleitbar ist wird, daß der sendende Teilnehmer geeignet ist, aus der Zeitdifferenz zwischen dem Absenden und dem Eintreffen des Testsignals (TS,TSE) die Signallaufzeit (v20-v60) zu bestimmen.

4. Lokales Operationsnetzwerk nach Anspruch 1, **dadurch gekennzeichnet, daß** die Nachrichten (A-F) der einzelnen Teilnehmer (10-60) sequentiell in den Datenrahmen (3) einfügbar sind.

5. Lokales Operationsnetzwerk nach Anspruch 1, **dadurch gekennzeichnet, daß** beim Start des Bussystems jeder Teilnehmer (10-60) geeignet ist, zur Kontrolle seiner einzelnen Komponenten einen Selbsttest durchzuführen.

6. Lokales Operationsnetzwerk nach Anspruch 5, **dadurch gekennzeichnet, daß** der Selbsttest zeitüberwachbar ist.

7. Lokales Operationsnetzwerk nach Anspruch 1, **dadurch gekennzeichnet, daß** ein als Rahmentaktgenerator fungierende Teilnehmer (10) Rahmenkennungen (SOF,EOF) erzeugen kann, die den Beginn und das Ende eines Datenrahmens (3) kennzeichnen.

8. Lokales Operationsnetzwerk nach Anspruch 7, **dadurch gekennzeichnet, daß** durch das Eintreffen der den Beginn eines Datenrahmens (3) kennzeichnenden Rahmenkennung (SOF) im zentralen Sternkoppler (1) ein Referenzzeitpunkt (T0) festlegbar ist.

9. Lokales Operationsnetzwerk nach einem der Ansprüche 1 bis 8, **dadurch gekennzeichnet, daß** der Datenrahmen (3) ein synchrone Dienste vermittelndes synchrones Rahmenmodul und ein asynchrone vermittelndes asynchrones Rahmenmodul enthält, und daß die Aufteilung des Datenrahmens (3) in diese beiden Rahmenmodule dynamisch variierbar ist.

10. Lokales Operationsnetzwerk nach Anspruch 9, **dadurch gekennzeichnet, daß** die Aufteilung des Datenrahmens (3) durch ein dynamisch verschiebbares Teilungsmodul erfolgt, welches im Rahmentaktgenerator erzeugt wird, oder daß die Aufteilung des Datenrahmens (3) durch einen an dessen Beginn auftretenden Zeiger angezeigt wird.

11. Lokales Operationsnetzwerk nach einem der Ansprüche 1 bis 10, **dadurch gekennzeichnet, daß** die Funktion des Rahmentaktgenerators einem bestimmten Teilnehmer (10) des Bussytems des lokalen Operationsnetzwerkes zugeordnet ist.

12. Lokales Operationsnetzwerk nach einem der Ansprüche 1 bis 11, **dadurch gekennzeichnet, daß** die Funktion des Rahmentaktgenerators bei Inbetriebnahme oder bei einer Rekonfiguration nach einem Ausfall von mindestens einem weiteren Teilnehmer (20-60) übernehmbar ist, wobei netzwerksintern eine hierarchische Abfolge der einzelnen Teilnehmer festgelegt ist, derart, daß ein rangniedriger Teilnehmer (20-60) die Funktion des Rahmentaktgenerators übernimmt, wenn er innerhalb eines definierten Zeitintervalls keine Rahmentaktkennung eines hierarchisch übergeordneten Teilnehmers (10) empfängt.

13. Lokales Operationsnetzwerk nach Anspruch 12, **dadurch gekennzeichnet, daß** durch jeden Teilnehmer (10-60) des Operationsnetzwerks die Funktion des Rahmentaktgenerators übernehmbar ist.

14. Lokales Operationsnetzwerk nach Anspruch 11,12 oder 13, **dadurch gekennzeichnet, daß** der die Funktion des Rahmentaktgenerators übernehmende Teilnehmer (10) geeignet ist, ein Signal (H) zu den übrigen Teilnehmern (20-60) des lokalen Operationsnetzwerkes zu senden, welches deren Rahmentaktgenerator-Funktionsübernahme inhibiert.

15. Lokales Operationsnetzwerk nach einem der Ansprüche 1 bis 14, **dadurch gekennzeichnet, daß** der als Rahmentaktgenerator fungierende Teilnehmer (10) geeignet ist, ein Signal (H) an die weiteren Teilnehmer (20-60) zu senden, welches bei diesen den Start eines Timers bewirkt, und daß die weiteren Teilnehmer geeignet sind, nach Ablauf eines durch den Timer festgelegten teilnehmerspezifischen Zeitintervalls (T) die Bestimmung ihres Rahmensendetakts (RST) durchzuführen.

16. Lokales Operationsnetzwerk nach Anspruch 15, **dadurch gekennzeichnet, daß** die weiteren Teilnehmer (20-60) geeignet sind, nach dem Abschluß ihrer Synchronisationsprozedur eine Teilnehmer-Kennung (H2,H6) zu dem als Rahmentaktgenerator fungierenden Teilnehmer (10) zu senden.

17. Lokales Operationsnetzwerk nach Anspruch 1, **dadurch gekennzeichnet, daß** mindestens ein Teilnehmer (10-60) des lokalen Operationsnetzwerkes über mindestens einen sekundären Sternkoppler (2) an den zentralen Sternkoppler (1) angeschlossen ist.

18. Lokales Operationsnetzwerk nach Anspruch 17, **dadurch gekennzeichnet, daß** mindestens ein Teilnehmer (10-60) des lokalen Operationsnetzwerkes als Multiplexer/Demultiplexer ausgeführt ist.

19. Lokales Operationsnetzwerk nach Anspruch 17 oder 18, **dadurch gekennzeichnet, daß** jeder Teilnehmer (10-60) einen Sende-/Empfangsteil (100) enthält, der einen Funktionsblock (120) zur Bestimmung der Signallaufzeit enthält.

20. Lokales Operationsnetzwerk nach Anspruch 19, **dadurch gekennzeichnet, daß** der Funktionsblock (120) eine mit einem Rahmenstrukturgenerator/-überwacher (130) zusammenwirkendes Verzögerungsglied (121) aufweist.

21. Lokales Operationsnetzwerk nach Anspruch 19, **dadurch gekennzeichnet, daß** der Sende-/Empfangsteil (100) einen O/E-Wandler (101) und einen E/O-Wandler (171) enthält.

22. Lokales Operationsnetzwerk nach Anspruch 19, **dadurch gekennzeichnet, daß** der Sende-/Empfangsteil (100) ein Modulselektor (140,140a) enthält, der die Aufteilung des Datenrahmens (3) in das synchrone und das asynchrone Rahmenmodul durchführt.

23. Lokales Operationsnetzwerk nach Anspruch 19, **dadurch gekennzeichnet, daß** der Sende-/Empfangsteil (100) einen Multiplexer (170) und einen Demultiplexer (151) enthält.

## Claims

1. A local operation network which comprises a number of stations (10-60) each connected via a bus line (10a, 10b; 20a, 20b; 30a, 30b; 40a, 2a, 40b, 2b; 50a, 2a, 50b, 2b; 60a, 2a, 60b, 22b) to a central star coupler (1) in order to transmit a message, sent by a station (10-60), via the central star coupler (1) to all the stations (10-60) of the local operation network, **characterised in that** a frame clock generator is provided which is capable of generating and transmitting a frame clock (RT) determined by a sequence of data frames (3) of defined bit length, that the central star coupler (1) is capable of receiving the frame clock (RT) and, from the time sequence of the data frames (3) of the frame clock (RT), defining a reference frame clock governing the signal processing of the stations (10-60) of the local operation network, that the stations (20-60) are each capable of determining an individual frame transmit clock (RST) such that the respective message (B-F) sent by a specific station (20-60), taking into account the signal propagation delay from the sending station (20-60) to the central star coupler (1), arrives in the central star coupler (1) at the defined time, relative to the reference frame clock, at which this message (B-F) is to be incorporated into the data frame present in the central star coupler (1), and that the central star coupler (1) is capable of transmitting the data frame (3'), which contains the messages (A-F) of the stations (10-60), to all the stations (10-60).

2. A local operation network according to Claim 1, **characterised in that** the signal propagation delay (v20-v60) between each individual station (20-60) and the central star coupler (1) can be dynamically determined on each start of the operation network, and that the frame transmit clock of the station (20-60) can be shifted in time relative to its frame receive clock (RET) by the determined signal propagation delay.

3. A local operation network according to Claim 1 or 2, **characterised in that** for the determination of the signal propagation delay (v20-v60), each station (20-60) is capable of sending a test signal (TS) to the central star coupler (1), that this test signal (TS) can be sent back to the sending station (20-60) in the transmitted data frame (3'), and that the sending station is capable of determining the signal propagation delay (v20-v60) from the time difference between the transmission and arrival of the test signal (TS, TSE).

4. A local operation network according to Claim 1, **characterised in that** the messages (A-F) of the individual stations (10-60) can be inserted sequentially into the data frame (3).

5. A local operations network according to Claim 1, **characterised in that** on the start-up of the bus system each station (10-60) is capable of performing a self-test for the checking of its individual components.

6. A local operation network according to Claim 5, **characterised in that** the self-test can be time-supervised.

7. A local operation network according to Claim 1, **characterised in that** a station (10), functioning as frame clock generator, can generate frame mark bits (S0F, E0F) which mark the beginning and the end of a data frame (3).

8. A local operation network according to Claim 7, **characterised in that** a reference time (T0) can be fixed by the arrival in the central star coupler (1) of the frame mark bit (S0F) marking the beginning of a data frame (3).

9. A local operation network according to one of Claims 1 to 8, **characterised in that** the data frame (3) contains a synchronous frame module which switches synchronous services and an asynchronous frame module which switches asynchronous services, and that the division of the data frame (3) into these two frame modules is dynamically variable.

10. A local operation network according to Claim 9, **characterised in that** the division of the data frame (3) is effected by a dynamically shiftable division module which is generated in the frame clock generator, or that the division of the data frame (3) is indicated by a pointer occurring at the beginning of said data frame (3).

11. A local operation network according to one of Claims 1 to 10, **characterised in that** the function of the frame clock generator is assigned to a specific station (10) of the bus system of the local operation network.

12. A local operation network according to one of Claims 1 to 11, **characterised in that** upon start-up or in the event of a reconfiguration following a failure, the function of the frame clock generator can be assumed by at least one other station (20-60), with a hierarchical sequence of the individual stations being fixed internally within the network, such that a low-level station (20-60) assumes the function of the frame clock generator if it does not receive a frame clock mark bit of a higher-level station (10) within a defined time interval.

13. A local operation network according to Claim 12, **characterised in that** the function of the frame clock generator can be assumed by any station (10-60) of the operation network.

14. A local operation network according to Claim 11, 12 or 13, **characterised in that** the station (10) assuming the function of the frame clock generator is capable of sending the other stations (20-60) of the local operation network a signal (H) which inhibits their assumption of the frame clock generator function.

15. A local operation network according to one of Claims 1 to 14, **characterised in that** the station (10) functioning as frame clock generator is capable of sending the other stations (20-60) a signal (H) which causes a timer to start therein, and that after the elapse of a station-specific time interval (T) fixed by the timer, the other stations are capable of determining their frame transmit clock (RST).

16. A local operation network according to Claim 15, **characterised in that** after the conclusion of their synchronisation procedure the other stations (20-60) are capable of sending a station identification (H2, H6) to the station (10) functioning as frame clock generator.

17. A local operation network according to Claim 1, **characterised in that** at least one station (10-60) of the local operation network is connected to the central star coupler (1) via at least one secondary star coupler (2).

18. A local operation network according to Claim 17, **characterised in that** at least one station (10-60) of the local operation network is designed as multiplexer/demultiplexer.

19. A local operation network according to Claim 17 or 18, **characterised in that** each station (10-60) comprises a transmit/receive section (100) which contains a function block (120) for determining the signal propagation delay.

20. A local operation network according to Claim 19, **characterised in that** the function block (120) comprises a delay element (121) which cooperates with a frame structure generator/monitor (130).

21. A local operation network according to Claim 19,
**characterised in that** the transmit/receive section (100) contains an O/E transducer (101) and an E/O transducer (171).

22. A local operation network according to Claim 19, **characterised in that** the transmit/receive section (100) contains a module selector (140, 140a) which performs the division of the data frame (3) into the synchronous frame module and the asynchronous frame module.

23. A local operation network according to Claim 19, **characterised in that** the transmit/receive section (100) contains a multiplexer (170) and a demultiplexer (151).

## Revendications

1. Réseau opérationnel local présentant un certain nombre d'abonnés (10-60) qui sont reliés respectivement à travers une ligne de bus (10a, 10b; 20a, 20b; 30a, 30b; 40a, 2a, 40b, 2b; 50a, 2a, 50b, 2b; 60a, 2a, 60b, 22b) à un coupleur en étoile central (1) pour acheminer un message envoyé par un abonné (10-60) à travers le coupleur en étoile central (1) à tous les abonnés (10-60) du réseau opérationnel local, **caractérisé en ce qu'**un générateur d'horloge de trame est prévu qui est capable de générer et d'émettre une horloge de trame (RT) déterminée par une série de trames de données (3) de longueur binaire définie, **en ce que** le coupleur en étoile central (1) est capable de recevoir l'horloge de trame (RT) et de définir à partir de la séquence dans le temps des trames de données (3) de l'horloge de trame (RT) une horloge de trame de référence déterminant le traitement de signal des abonnés (10-60) du réseau opérationnel local, **en ce que** les abonnés (20-60) sont respectivement capables de déterminer une horloge d'émission de trame (RST) individuelle de telle sorte que le message (B-F) envoyé respectivement par un certain abonné (20-60) atteint, en tenant compte du temps de propagation de signal entre l'abonné émetteur (20-60) et le coupleur en étoile central (1), ce dernier à un instant défini par rapport à l'horloge de trame de référence avec laquelle ce message (B-F) doit être intégré dans la trame de données présente dans le coupleur en étoile central (1), et **en ce que** le coupleur en étoile central (1) est capable d'acheminer la trame de données (3') contenant les messages (A-F) des abonnés (10-60) à tous les abonnés (10-60).

2. Réseau opérationnel local selon la revendication 1, **caractérisé en ce que** le temps de propagation de signal (v20-v60) entre chacun des abonnés (20-60) et le coupleur en étoile central (1) peut être déterminé de façon dynamique à chaque démarrage du réseau opérationnel, et **en ce que** l'horloge d'émission de trame de l'abonné (20-60) peut être décalée dans le temps en fonction du temps de propagation de signal déterminé par rapport à son horloge de réception de trame (RET).

3. Réseau opérationnel local selon la revendication 1 ou 2, **caractérisé en ce que** pour la détermination du temps de propagation de signal (v20-v60), chaque abonné (20-60) est capable d'envoyer un signal de test (TS) au coupleur en étoile central (1), **en ce que** ce signal de test (TS) peut être réacheminé à l'abonné émetteur (20-60) dans la trame de données envoyée (3'), **en ce que** l'abonné émetteur est capable de déterminer le temps de propagation de signal (v20-v60) à partir de la différence de temps entre l'envoi et l'arrivée du signal de test (TS, TSE).

4. Réseau opérationnel local selon la revendication 1, **caractérisé en ce que** les messages (A-F) des abonnés (10-60) individuels peuvent être insérés dans la trame de données (3) de façon séquentielle.

5. Réseau opérationnel local selon la revendication 1, **caractérisé en ce qu'**au démarrage du système de bus, chaque abonné (10-60) est capable de réaliser un test automatique pour vérifier ses différents composants.

6. Réseau opérationnel local selon la revendication 5, **caractérisé en ce que** le test automatique peut être surveillé dans le temps.

7. Réseau opérationnel local selon la revendication 1, **caractérisé en ce qu'**un abonné (10) servant de générateur d'horloge de trame peut générer des identifications de trame (SOF, EOF) qui identifient le début et la fin d'une trame de données (3).

8. Réseau opérationnel local selon la revendication 7, **caractérisé en ce que** l'arrivée de l'identification de trame (SOF) identifiant le début d'une trame de données (3) au coupleur en étoile central (1) permet de déterminer un instant de référence (TO).

9. Réseau opérationnel local selon l'une quelconque des revendications 1 à 8, **caractérisé en ce que** la trame de données (3) comprend un module de trame synchrone transmettant des services synchrones et un module de trame asynchrone transmettant des services asynchrones, et **en ce que** la répartition de la trame de données (3) en ces deux modules de trame peut être modifiée de façon dynamique.

10. Réseau opérationnel local selon la revendication 9, **caractérisé en ce que** la répartition de la trame de données (3) est effectuée par un module de séparation pouvant être déplacé de façon dynamique qui est généré dans le générateur d'horloge de trame, ou **en ce que** la répartition de la trame de données (3) est indiquée par un pointeur apparaissant à son début.

11. Réseau opérationnel local selon l'une quelconque des revendications 1 à 10, **caractérisé en ce que** la fonction du générateur d'horloge de trame est affectée à un certain abonné (10) du système de bus du réseau opérationnel local.

12. Réseau opérationnel local selon l'une quelconque des revendications 1 à 11, **caractérisé en ce que** la fonction du générateur d'horloge de trame peut être récupérée à la mise en service ou au moment d'une reconfiguration après une panne auprès d'au moins un autre abonné (20-60), une séquence hiérarchique des abonnés individuels étant déterminée à l'intérieur du réseau de sorte qu'un abonné (20-60) de rang inférieur prend en charge la fonction du générateur d'horloge de trame si, à l'intérieur d'un intervalle de temps défini, il ne reçoit aucune identification d'horloge de trame provenant d'un abonné (10) de niveau hiérarchique supérieur.

13. Réseau opérationnel local selon la revendication 12, **caractérisé en ce que** chaque abonné (10-60) du réseau opérationnel peut prendre en charge la fonction du générateur d'horloge de trame.

14. Réseau opérationnel local selon la revendication 11, 12 ou 13, **caractérisé en ce que** l'abonné (10) prenant en charge la fonction du générateur d'horloge de trame envoie un signal (H) aux autres abonnés (20-60) du réseau opérationnel local qui inhibe leur prise en charge de la fonction de générateur d'horloge de trame.

15. Réseau opérationnel local selon l'une quelconque des revendications 1 à 14, **caractérisé en ce que** l'abonné (10) servant de générateur d'horloge de trame est capable d'envoyer un signal (H) aux autres abonnés (20-60) qui déclenche chez eux le démarrage d'un temporisateur, et **en ce que** les autres abonnés sont capables d'effectuer la détermination de leur horloge d'émission de trame (RST) après expiration d'un intervalle de temps (T) spécifique à l'abonné et déterminé par le temporisateur.

16. Réseau opérationnel local selon la revendication 15, **caractérisé en ce que** les autres abonnés (20-60) sont capables d'envoyer à l'abonné (10) servant de générateur d'horloge de trame une identification d'abonné (H2, H6) après achèvement de leur procédure de synchronisation.

17. Réseau opérationnel local selon la revendication 1, **caractérisé en ce qu'**au moins un abonné (10-60) du réseau opérationnel local est connecté au coupleur en étoile central (1) par au moins un coupleur en étoile secondaire (2).

18. Réseau opérationnel local selon la revendication 17, **caractérisé en ce qu'**au moins un abonné (10-60) du réseau opérationnel local est réalisé comme multiplexeur/ démultiplexeur.

19. Réseau opérationnel local selon la revendication 17 ou 18, **caractérisé en ce que** chaque abonné (10-60) comprend une partie d'émission/ réception (100) qui comprend un bloc de fonction (120) pour déterminer le temps de propagation de signal.

20. Réseau opérationnel local selon la revendication 19, **caractérisé en ce que** le bloc de fonction (120) présente un élément de retard (121) coopérant avec un générateur/ contrôleur de structure de trame (130).

21. Réseau opérationnel local selon la revendication 19, **caractérisé en ce que** la partie d'émission/ réception (100) comprend un convertisseur O/E (101) et un convertisseur E/O (171).

22. Réseau opérationnel local selon la revendication 19, **caractérisé en ce que** la partie d'émission/ réception (100) comprend un sélecteur de module (140, 140a) qui réalise la répartition de la trame de données (3) en modules de trame synchrone et asynchrone.

23. Réseau opérationnel local selon la revendication 19, **caractérisé en ce que** la partie d'émission/ réception (100) comprend un multiplexeur (170) et un démultiplexeur (151).
